# EUROPÄISCHE PATENTSCHRIFT

(11) **EP 3 359 814 B1**
(45) Veröffentlichungstag und Bekanntmachung des Hinweises auf die Patenterteilung: **10.06.2020**
(21) Anmeldenummer: 16748311.4
(22) Anmeldetag: 10.08.2016
(51) Int. Cl.: F04B 11/00, F04B 39/00

(54) **MEMBRANDOSE ZUM DÄMPFEN VON DRUCKPULSATIONEN IN EINEM NIEDERDRUCKBEREICH EINER KOLBENPUMPE**
DIAPHRAGM CELL FOR DAMPING PRESSURE PULSATIONS IN A LOW-PRESSURE RANGE OF A PISTON PUMP
CAPSULE À MEMBRANE POUR L'AMORTISSEMENT DE PULSATIONS DE PRESSION DANS UNE RÉGION DE BASSE PRESSION D'UNE POMPE À PISTONS

(30) Priorität: 08.10.2015 DE 102015219537
(43) Veröffentlichungstag der Anmeldung: 15.08.2018
(73) Patentinhaber: Robert Bosch GmbH, 70442 Stuttgart (DE)
(72) Erfinder: SCHRETLING, Viktor, 71706 Markgroeningen (DE); SCHENK, Tobias, 73614 Schorndorf (DE)
(86) Internationale Anmeldenummer: PCT/EP2016/069010
(87) Internationale Veröffentlichungsnummer: WO 2017/059988

(56) Entgegenhaltungen:
- DE-A1- 10 327 408
- DE-A1-102009 000 357
- DE-A1-102010 027 773
- US-A1- 2012 087 817

## Beschreibung

### Stand der Technik

Die Erfindung betrifft eine Membrandose zum Dämpfen von Druckpulsationen in einem Niederdruckbereich einer Kolben-Kraftstoffpumpe, wobei die Membrandose zwei an ihren radialen Rändern dicht miteinander verschweißte Membranen aufweist, wobei die zwei Membranen einen Gasraum umschließen und wobei die zwei Membranen beide axial verformbar sind.

Derartige Membrandosen sind beispielsweise aus der EP 1 411 236 A2, der EP 2317 119 A1, der EP 2 410 167 A1, der WO2012/095718 A2 und der DE 10 2004 002 489 B4 und auch aus der nachveröffentlichten DE 10 2014 219 997 A1 der Anmelderin bekannt und ferner aus der US 2012/087817 A1, der DE 103 27 408 A1 und der DE 10 2010 027 773 A1.

### Offenbarung der Erfindung

Die erfindungsgemäße Membrandose zeichnet sich dadurch aus, dass die Membranen einen in radialer Erstreckung zentralen Bereich aufweisen, in dem die Membranen in der erfindungsgemäßen Art und Weise geformt sind, wenn die Druckdifferenz, die ein Druck im Gasraum abzüglich eines Drucks außerhalb des Gasraums, insbesondere eines Drucks im Niederdruckbereich der Kolbenpumpe, ist, Null ist, also ein Druckausgleich zwischen dem Inneren der Membrandose und dem Äußeren der Membrandose vorliegt.

Die Druckdifferenz ist also mit anderen Worten die an den Membranen unmittelbar wirksam werdende Druckdifferenz.

Die erfindungsgemäße Membrandose verbessert die aus dem Stand der Technik bekannten Membrandosen hinsichtlich ihrer Wirksamkeit, sowohl auftretende Druckschwankungen durch eine hohe Nachgiebigkeit im Bereich funktionsrelevanter Druckdifferenzen stark zu dämpfen, als auch hohe verbleibende Druckdifferenzen beider Vorzeichen ohne Materialermüdung über Lebensdauer ertragen zu können.

Der Erfindung liegt zunächst die grundsätzliche Erkenntnis zugrunde, dass die auf die Membrandose insgesamt resultierend einwirkenden Kräfte minimiert sind, wenn der Druck im Gasraum mit einem im Mittel im Niederdruckbereich der Kolbenpumpe herrschenden Druck zumindest etwa gleich ist. Eine dies und die vorgesehenen Einsatzbedingungen der Membrandose (Temperatur und Druck im Niederdruckbereich der Kolbenpumpe) berücksichtigende Füllung des Gasraums der Membrandose ist insofern vorteilhaft für eine hohe Robustheit bzw. Lebensdauer der Membrandose. Mit anderen Worten ist als günstig erkannt worden, eine Membrandose so auszulegen bzw. eine Kolbenpumpe so zu betreiben, dass bei einer im Niederdruckbereich der Kolbenpumpe angeordneten Membrandose eine auf die Membrandose einwirkende Druckdifferenz im Mittel Null ist.

Überdies wurde erkannt, dass eine Membrandose eine maximale Nachgiebigkeit, das heißt eine maximale Volumenänderung des Gasvolumens pro Änderung des einwirkenden Außendrucks, in einem Bereich hat, in dem die Memrandose nur in einem höchstens geringfügigen Maße eingewölbt und/oder vorgewölbt ist.

Wenngleich insofern Membranen als grundsätzlich günstig erkannt wurden, die in ihrem zentralen Bereich relativ plan und in zumindest in gewisser Näherung planparallel zueinander verlaufen, waren in Versuchen der Anmelderin an Membrandosen, deren Membranen in ihrem zentralen Bereich in einem druckausgeglichenen Zustand gänzlich plan verlaufend vorgesehen waren, in dynamischen Anwendungen gelegentlich metastabile Zustände der Membranen beobachtbar, und mit diesen verbunden traten Umklappprozesse zwischen konvexen und konkaven Deformationen der Membranen auf, die zu unzulässigen Belastungen der Membrandosen führten. Recht anschaulich kann dies als das Auftreten des "Knackfroscheffekts" verstanden und auf Fertigungsstreuungen zurückgeführt werden.

Auf den voranstehenden Überlegungen und Beobachtungen basierend, wurde zum einen der Gegenstand des Anspruchs 1, eine insgesamt optimierte Membrandose, entwickelt, deren Membranen in einem zentralen Bereich, der eine Mindestgröße aufweist, in der erfindungsgemäßen Art und Weise von einer gänzlich planen Gestaltung abweichen.

Unter einem wellenförmig geformten Bereich einer Membran wird im Rahmen der Anmeldung grundsätzlich insbesondere verstanden, dass die Membran in diesem Bereich nicht plan ist, sondern entlang der Querschnittsfläche der Membran in diesem Bereich verschieden weit in axialer Richtung vorgewölbt bzw. eingewölbt ist.

Der Begriff wellenförmig geformter Bereich einer Membran kann ferner insbesondere voraussetzen, dass die Membran in diesem Bereich eine geschwungene Form hat, die insbesondere eine zumindest näherungsweise räumliche Periodizität aufweist, insbesondere in radialer Richtung.

In Weiterbildung kann der wellenförmig geformte Bereich lediglich sehr flache Wellen aufweisen, sodass eine Oberflächennormale auf der Membran in diesem Bereich mit der axialen Richtung einen Winkel einschließt, der stets nicht größer als 12° ist, insbesondere sogar nicht größer als 8° ist.

Für Membrandosen mit zylindrischer Symmetrie können in dem wellenförmig geformten Bereich insbesondere umlaufende rund geformte Sicken vorliegen.

Die Begriffe "nach außen vorgewölbt" und "nach innen eingewölbt" spezifizieren im Rahmen dieser Anmeldung insbesondere die Orientierung der lokalen Krümmung der Membranen, insbesondere mit Hinblick auf die Betrachtung der Membranen in einer Schnittebene, die parallel zur axialen Richtung ist, bei Membranen mit zylindrischer Symmetrie in einer Schnittebene, in der die Symmetrieachse liegt. Dies erfolgt mit Hinblick auf den durch die Membrandose eingeschlossenen Gasraum. Konvexität entspricht insbesondere einer Vorwölbung nach außen und Konkavität entspricht insbesondere einer Einwölbung nach innen.

Der Begriff Amplitude der Wellenform in dem zentralen Bereich spezifiziert im Rahmen dieser Anmeldung insbesondere die Hälfte der maximal auftretenden Distanz zwischen einem Punkt des radial inneren Bereichs und einem Punkt des ringförmigen Bereichs, gemessen in axialer Richtung.

Der Begriff der Wellenform kann in Weiterbildung hierzu dahingehend verstanden werden, dass er zusätzlich voraussetzt, dass ein Punkt des ringförmigen Bereichs existiert und ein Punkt des radial äußeren Bereichs existiert, deren Distanz, gemessen in axialer Richtung, gleich oder größer der Amplitude der Wellenform ist. Anschaulich bedeutet dies insbesondere, dass eine Wellenform notwendigerweise einen radial inneren Wellenberg aufweist und einen radial äußeren Wellenberg aufweist, der zumindest halb so hoch ist wie der innere Wellenberg. Noch anschaulicher bedeutet dies insbesondere, dass eine Wellenform im Sinne der Erfindung eine volle Wellenlänge eines Wellenzuges umfasst.

Insofern als Vergleichsgröße für Streckenlängen im Rahmen dieser Anmeldung auf die Querschnittsfläche der Membranen Bezug genommen wird, ist insbesondere die Querschnittsfläche in axialer Aufsicht auf die Membranen gemeint. Die Wurzel der Querschnittsfläche ist die mathematische Quadratwurzel der Querschnittsfläche. Bei Membrandosen mit zylindrischer Symmetrie sind die Membranen kreisrund und die Wurzel des 4/pi-fachen der Querschnittsfläche der Membranen ist durch den Durchmesser der Membranen gegeben.

Ferner ergibt sich der weitere Gegenstand eines Verfahrens zum Betreiben einer Kolbenpumpe, beispielsweise in einem Kraftstoffsystem für eine Brennkraftmaschine, in deren Niederdruckbereich eine erfindungsgemäße Membrandose angeordnet ist, wobei ein Druck im Niederdruckbereich, beispielsweise durch die Vorsehung einer entsprechenden Vorpumpe, gleich dem Druck im Gasraum der Membrandose gewählt ist. Dieser Druck kann beispielsweise in einem Bereich von 4bar bis 7bar bei 20°C oder bei 40°C oder bei einer Temperatur zwischen 20°C und 40°C liegen.

Wenn nicht ausdrücklich anders angegeben, sind in der vorliegenden Schrift Bezugnahmen auf die Form der Membrandose so zu verstehen, dass die Membrandose diese Form dann, insbesondere nur dann, aufweist, wenn die Druckdifferenz Null ist. Gemäß der Nachgiebigkeit der Membrandose ist diese bei positiver Druckdifferenz stärker aufgewölbt und bei negativer Druckdifferenz stärker eingedrückt.

Die Angaben für die Druckdifferenz "Null", "positiv" und "negativ" sind insbesondere nicht in mathematischer Strenge auszulegen, sondern im Bereich dessen, was sich bei normaler Fertigungsstreuung für die betreffenden Merkmale ergibt. So kann eine Druckdifferenz von Null im Sinne der Erfindung auch vorliegen, wenn ein geringer Unter- oder Überdruck zwischen Gasraum und Umgebung vorliegt, beispielsweise maximal 0,25 bar und/oder maximal 5% des Drucks in dem Gasraum. Auch die Merkmale die mittels positiven oder negativen Druckdifferenzen definiert sind, sind insbesondere dadurch weiter auszulegen, dass entsprechende Unschärfen auch zugelassen werden.

Alternativ kommt insbesondere auch eine sehr enge Auslegung des Begriffs der Druckdifferenz von Null im Sinne der Erfindung in Betracht, die Druckdifferenzen von mehr als 1mbar nicht zulässt.

Unter der Form einer Membran ist im Rahmen dieser Anmeldung insbesondere die Form der - mit Hinblick auf das durch die Membrandose eingeschlossene Volumen - nach außen weisenden Oberfläche der Membran gemeint.

Vorteilhafterweise sind die Membranen besonders einfach zu fertigen, beispielsweise ausgehend von je einem ebenen Blechformteil pro Membran mittels einer einzigen Tiefziehstufe.

Vorteilhafterweise haben die Membranen und/oder der zentrale Bereich und/oder der innere Bereich des zentralen Bereichs in axialer Aufsicht eine runde, insbesondere kreisrunde, Form, sodass ihre Handhabung einfach und ihre Stabilität hoch ist. Zusätzlich oder alternativ haben der äußere Bereich des zentralen Bereichs und/oder der weitere ringförmige Bereich in axialer Aufsicht eine runde, insbesondere kreisrunde, Außenkontur.

Bevorzugt ist die gesamte Membrandose symmetrisch zu einer Symmetrieachse. Grundsätzlich sind aber auch abweichende Formen von einer runden Form möglich. Die Angaben über Durchmesser und Radien beziehen sich dann im Rahmen dieser Anmeldung auf Durchmesser und Radien von runden Formen mit gleicher Fläche. Die axiale Richtung ergibt sich in diesem Fall als Senkrechte auf der Ebene, in der die Ränder der Membranen liegen, bzw., falls die Ränder der Membranen nicht in einer Ebene liegen, als Senkrechte auf der Ebene, von der die Ränder der Membranen im Mittel am wenigsten abweichen. Die axiale Richtung kann insbesondere auch durch eine Symmetrieachse eines Pumpenkolbens in einer Kolbenpumpe bzw. durch dessen Bewegungsrichtung gegeben sein.

Die Durchmesser der Membranen und der Membrandose liegen bevorzugt in einem Bereich von 30-50 mm. Die maximale axiale Erstreckung der Membrandose liegt bevorzugt zwischen 2 und 6mm. Es ist bevorzugt, dass die Membranen eine Wandstärke im Bereich von 0,1mm bis 0,4mm haben und aus einem nichtrostenden Stahl bestehen, beispielsweise einem Federstahl, beispielsweise einem ChromNickelstahl, beispielsweise der Sorte 1.4310. Es ist bevorzugt, dass resultierend eine Abhängigkeit der axialen Erstreckung der Membrandose im zentralen Bereich, bevorzugt entlang einer Mittelachse, von der Druckdifferenz im Bereich verschwindender Druckdifferenz im Bereich von 0,2 bis 0,6 mm/bar liegt. Es ist bevorzugt, dass eine Abhängigkeit des von der Membrandose eingeschlossenen Gasvolumens von der Druckdifferenz im Bereich verschwindender Druckdifferenz im Bereich von 200 bis 400 mm³/bar liegt.

Hinsichtlich einer Kolbenpumpe, in indessen Niederdruckbereich die Membrandose angeordnet ist, ist insbesondere vorgesehen, dass eine Nachgiebigkeit der Membrandose im Bereich verschwindender Druckdifferenz im Bereich von 15% bis 50%, insbesondere im Bereich von 20% bis 30%, des durch den Hub des Kolbens maximal förderbaren Volumens der Kolbenpumpe pro bar Druckdifferenz liegt.

Es ist bevorzugt, dass die Abhängigkeit des von der Membrandose eingeschlossenen Gasvolumens von der Druckdifferenz in einem Intervall der Druckdifferenzen von mindestens 3 bar, zum Beispiel im Intervall der Druckdifferenz von -1,5 bar bis +1,5 bar stets mindestens 60 % der maximalen Nachgiebigkeit der Membrandose beträgt, beispielsweise in diesem Intervall also stets mindestens 150 mm³/bar beträgt, wenn die maximale Nachgiebigkeit der Membrandose 250 mm³/bar beträgt.

Die erfindungsgemäße Formgebung des zentralen Bereichs ist vorliegend von großer Bedeutung. Die Wirksamkeit der Erfindung ist in besonderem Maß gegeben, wenn der zentrale Bereich eine Querschnittsfläche aufweist, die nicht kleiner ist als 55% oder sogar nicht kleiner ist als 60% der Querschnittsfläche zumindest einer der Membranen. Für kreisrunde Membrandosen entspricht das zentralen Bereichen mit Durchmessern, die nicht kleiner sind als 74% bzw. 77% der Durchmesser der Membrandosen.

Erfindungsgemäß ist vorgesehen, dass eine in axialer Richtung gemessene Amplitude der Wellenform zumindest 1/1000 und höchstens 2/100 der Wurzel des 4/pi-fachen der Querschnittsfläche der Membranen beträgt. In Weiterbildung der Erfindung können für die Amplitude auch 2/1000, 5/1000 und 1/100 der Wurzel des des 4/pi-fachen der Querschnittsfläche der Membranen als Untergrenze vorgesehen sein. Ferner können für die Amplitude auch 1/100, 12/1000 oder 17/1000 der Wurzel des 4/pi-fachen der Querschnittsfläche der Membranen als Obergrenze vorgesehen sein.

Eine Weiterbildung der Erfindung grenzt den radialen Abstand zwischen dem radial inneren Bereich und dem radial äußeren Bereich des zentralen Bereichs näher ein und korrespondiert mit der technischen Wirkung, dass die erfindungsgemäß vorgesehenen Bereiche über einen relativ großen Bereich der Membranen erstreckt sind, sodass die vorteilhaften Wirkungen der Erfindung in besonderem Maße realisiert werden. So kann vorgesehen sein, dass der in radialer Richtung gemessene Abstand zwischen der maximalen Vorwölbung im radial inneren Bereich und der maximalen Vorwölbung im radial äußeren Bereich zumindest 20% insbesondere sogar zumindest 30%, der Wurzel des 4/pi-fachen der Querschnittsfläche der Membranen beträgt.

Eine andere Weiterbildung der Erfindung sieht vor, dass der radial innere Bereich weiter in die axiale Richtung nach außen vorgewölbt ist als der radial äußere Bereich. Auf diese Weise konnten die vorteilhaften Wirkungen der Erfindung in besonderem Maße realisiert werden, insbesondere konnten metastabile Zustände und das Auftreten des "Knackfroscheffekts" besonders zuverlässig vermieden werden.

Eine Weiterbildung der Erfindung trägt dem Erfordernis Rechnung, dass bei der Herstellung der Membranen bzw. der Membrandose auf eine einfache Art und Weise eine optische Inspektion möglich sein sollte, die beispielsweise das Auftreten von Rissen in den Membranen zuverlässig erkennt. Hierfür ist insbesondere vorgesehen, dass eine Normale auf der Oberfläche zumindest einer der Membranen überall einen Winkel von nicht mehr als 60° mit einer axialen Richtung einschließt, die Membrandose in Aufsicht also nirgends zu stark geneigt verläuft. Hierdurch ist sichergestellt, dass eine optische Inspektion, deren feste optische Achse mit der axialen Richtung zusammenfällt, ohne weiteres möglich ist. Eine weitere Verbesserung in diesem Sinne kann erreicht werden, wenn die Normale auf der Oberfläche zumindest einer der Membranen überall einen Winkel von nicht mehr 45° mit einer axialen Richtung einschließt.

Durch die geometrische Formgebung der erfindungsgemäßen Membrandose ist ein vergleichsweise großes Gasvolumen verfügbar, wobei die Membrandose, beispielsweise in einem Niederdruckbereich einer Kolbenpumpe, nur einen vergleichsweise kleinen Bauraum beansprucht. Dies kommt quantitativ darin zum Ausdruck, dass das Volumen des Gasraums normiert auf das Volumen des kleinsten Zylinders, insbesondere des kleinsten geraden Kreiszylinders, der die Membrandose vollständig aufzunehmen vermag, bei verschwindender Druckdifferenz nicht kleiner als 0,4 ist.

Folgende Gegenstände bzw. Maßnahmen sind ebenfalls geeignet, für sich allein und/oder in Kombination miteinander und/oder mit den in den Ausführungsbeispielen und/oder unabhängigen und/oder abhängigen Ansprüchen dargelegten Gegenständen, die erfindungsgemäßen Vorteile in besonderem Maße zu realisieren:
- Membrandose, bei der eine Krümmung zumindest einer der Membranen an zumindest einer Stelle im zentralen Bereich kleiner ist als das Zehnfache der Wurzel des 4/pi-fachen der Querschnittsfläche der Membran bzw. des Durchmessers der Membran und/oder an deren Membranen bei zumindest einer Membran im zentralen Bereich eine Abweichung der tatsächlichen Form der Membran von jeder ideal planparallelen Form auftritt, die an zumindest einer Stelle mehr als 0,2 mm bzw. 5/1000 des 4/pi-fachen der Querschnittsfläche der Membran beträgt.
- Membrandose, dessen Membran aus Blech bestehen, dessen Dicke im Bereich von 50% bis 150%, insbesondere von 80% bis 120% der Amplitude der Wellenform im zentralen Bereich liegt oder deren Dicke mit der Amplitude der Wellenform im zentralen Bereich übereinstimmt.
- Kolbenpumpe, bei der die Membrandose durch zwei Halteteile nur radial einwärts einer an den Rändern der Membranen erfolgten Verschweißung gehalten wird.
- Kolbenpumpe, bei der ein radial innerer Bereich des zentralen Bereichs nicht nur bei einer Druckdifferenz von null konvex geformt ist, sondern auch bei Druckdifferenzen von mindestens -0,5 bar bis +0,5 bar, insbesondere sogar auch bei Druckdifferenzen von mindestens -1 bar bis +1 bar.
- Kolbenpumpe, bei der der Kolben als Stufenkolben ausgebildet ist und einen Ausgleichsraum begrenzt, sodass sich das Volumen des Ausgleichsraums in einer Saugphase der Kolbenpumpe verkleinert und in einer Förderphase der Pumpe vergrößert, wobei der Ausgleichsraum mit dem Niederdruckbereich der Kolbenpumpe fluidisch verbunden ist, insbesondere dergestalt, dass der Ausgleichsraum über eine in axialer Richtung durch ein Gehäuse der Kolbenpumpe verlaufende Bohrung mit einem in einem Gehäusedeckel der Kolbenpumpe gebildeten Fluidraum verbunden ist, wobei in dem Fluidraum die Membrandose angeordnet ist.

Nachfolgend werden Beispiele der vorliegenden Erfindung unter Bezugnahme auf die beiliegenden Zeichnungen näher erläutert.

In den Zeichnungen zeigen:
- Figur 1: eine schematische Darstellung eines Kraftstoffsystems einer Brennkraftmaschine mit einem Ausschnitt einer erfindungsgemäßen Kolbenpumpe
- Figur 2: eine vergrößerte Schnittdarstellung des Ausschnitts der Kolbenpumpe gemäß Figur 1
Die Figuren 3 bis 10 zeigen verschieden Ansichten der erfindungsgemäßen Membrandose.
Die Figur 11 zeigt in einem Diagramm die Abhängigkeit der Nachgiebigkeit der Membrandose von dem äußeren Druck

### Ausführungsformen

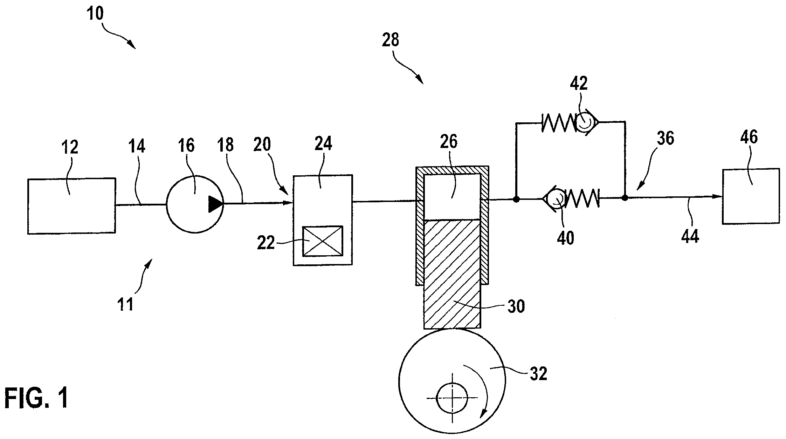

Figur 1 zeigt ein Kraftstoffsystem 10 für eine weiter nicht dargestellte Brennkraftmaschine in einer vereinfachten schematischen Darstellung. Aus einem Kraftstofftank 12 wird Kraftstoff über eine Saugleitung 14, mittels einer Vorförderpumpe 16, über eine Niederdruckleitung 18 dem Einlass 20 eines von einer elektromagnetischen Betätigungseinrichtung 22 betätigbaren Mengensteuerventils 24 einem Arbeitsraum 26 einer Kraftstoff-Hochdruckpumpe 28 zugeführt, beispielsweise mit einem Vordruck von 6bar. Beispielsweise kann das Mengensteuerventil 24 ein zwangsweise öffenbares Einlassventil der Kraftstoff-Hochdruckpumpe 28 sein.

Alternativ kann das Mengensteuerventil 24 auch so ausgeführt sein, dass es geöffnet ist, wenn die elektromagnetische Betätigungseinrichtung 22 nicht bestromt ist.

Vorliegend ist die Kraftstoff-Hochdruckpumpe 28 als Kolbenpumpe ausgeführt, wobei ein Kolben 30 mittels einer Nockenscheibe 32 in der Zeichnung vertikal bewegt werden kann. Hydraulisch zwischen dem Arbeitsraum 26 und einem Auslass 36 der Kraftstoff-Hochdruckpumpe 28 sind ein als federbelastetes Rückschlagventil gezeichnetes Auslassventil 40 sowie ein ebenfalls als federbelastetes Rückschlagventil gezeichnetes Druckbegrenzungsventil 42 angeordnet. Der Auslass 36 ist über eine Hochdruckleitung 44 an einen Hochdruckspeicher 46 ("Common Rail") angeschlossen.

Im Betrieb des Kraftstoffsystems 10 fördert die Vorförderpumpe 16 Kraftstoff vom Kraftstofftank 12 in die Niederdruckleitung 18. Das Mengensteuerventil 24 kann in Abhängigkeit von einem jeweiligen Bedarf an Kraftstoff geschlossen und geöffnet werden. Hierdurch wird die zu dem Hochdruckspeicher 46 geförderte Kraftstoffmenge beeinflusst. Bedingt durch die diskontinuierliche Arbeitsweise der Kraftstoff-Hochdruckpumpe 28 treten an mehreren Abschnitten des Kraftstoffsystems 10 sogenannte Druckpulsationen auf, insbesondere auch stromaufwärts von dem Arbeitsraum 26, also in einem Niederdruckbereich 11 der Kraftstoff-Hochdruckpumpe 28 bzw. des Kraftstoffsystems 10.

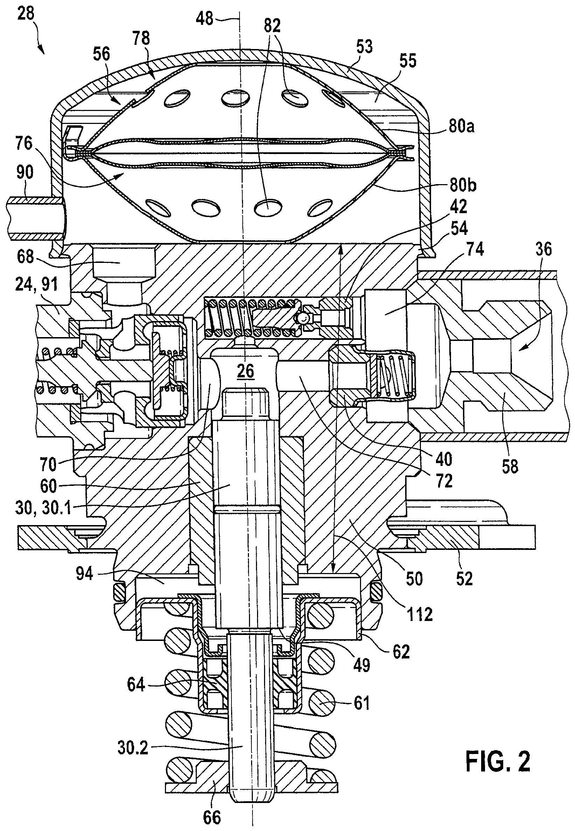

Figur 2 zeigt die Kraftstoff-Hochdruckpumpe 28 von Figur 1 in einer axialen Schnittdarstellung. Die Kraftstoff-Hochdruckpumpe 28 ist zumindest teilweise rotationsymmetrisch um eine Längsachse 48 ausgeführt.

Die Kraftstoff-Hochdruckpumpe 28 umfasst ein Gehäuse 50, welches mittels eines Flansches 52 an einen - nicht dargestellten - Motorblock der Brennkraftmaschine anschraubbar ist. In einem in der Figur 2 oberen Bereich umfasst die Kraftstoff-Hochdruckpumpe 28 einen Gehäusedeckel 53, welcher an einem oberen Gehäuseabsatz 54 des Gehäuses 50 fluidisch dicht angeordnet ist. In einem von dem Gehäusedeckel 53 begrenzten Fluidraum 55 ist eine hydraulische Dämpfungseinrichtung 56 angeordnet, welche weiter unten noch näher beschrieben werden wird.

In einem in der Figur 2 linken Bereich ist das Mengensteuerventil 24 und in einem rechten Bereich ist ein Auslassstutzen 58 zum Anschluss der Hochdruckleitung 44 (siehe Figur 1) an dem Gehäuse 50 angeordnet. Insbesondere in einem mittleren und unteren Bereich von Figur 2 sind unter anderem folgende weitere Elemente der Kraftstoff-Hochdruckpumpe 28 dargestellt: Das Druckbegrenzungsventil 42, das Auslassventil 40, der Kolben 30, der Arbeitsraum 26, die Laufbuchse 60, in welcher der Kolben 30 parallel zu der Längsachse 48 bewegbar ist, die in etwa topfförmig ausgebildete Federaufnahme 62 zur Aufnahme einer Kolbendichtung 64, welche einen in der Figur 2 unteren Abschnitt des Kolbens 30 radial außen umgibt, die als Schraubenfeder ausgeführte Kolbenfeder 61, sowie der an einem Endabschnitt des Kolbens 30 aufgepressten Federteller 66. Weiterhin sind an dem Gehäuse 50 in der dargestellten Schnittansicht mehrere hydraulische Kanäle 68, 70, 72 und 74 sichtbar.

Es ist vorgesehen, dass der Kolben 30 als Stufenkolben ausgebildet ist, mit einem zum Arbeitsraum 26 hin gewandten Bereich 30.1 mit größerem Durchmesser und einem vom Arbeitsraum fern gelegenen Bereich 30.2 mit kleinerem Durchmesser, wobei diese beiden Bereiche 30.1, 30.2 über eine ringförmige Stufe 49 miteinander verbunden sind.

Es ist ferner zwischen dem Gehäuse 50 und der topfförmig ausgebildeten Federaufnahme 62 und ferner begrenzt durch den Kolben 30 ein von dem Arbeitsraum 26 fluidisch getrennter Ausgleichsraum 94 vorgesehen. Die ringförmige Stufe 49 des Kolbens 30 ist in dem Ausgleichsraum 94 angeordnet. Dies hat zur Folge, dass sich das Volumen des Ausgleichsraums 94 während einer Saugphase der Kolbenpumpe (wenn sich der Kolben 30 in Figur 2 abwärts bewegt) verkleinert, und dass sich das Volumen des Ausgleichsraums 94 während einer Förderphase der Kolbenpumpe (wenn sich der Kolben 30 in Figur 2 aufwärts bewegt) vergrößert.

Es ist vorgesehen, dass der Ausgleichsraum 94 und der in dem Gehäusedeckel 53 gebildete Fluidraums 55 über eine in axialer Richtung durch das Gehäuse 50 verlaufende Bohrung 112, die außerhalb der in Figur 2 gezeigten Schnittebene liegt, verbunden sind. Die Bohrung 112 ist in der Figur 2 lediglich rein symbolisch als Doppelpfeil kenntlich gemacht.

Die Wirkung dieser Verbindung besteht darin, dass Kraftstoff der während der Saugphase der Kolbenpumpe aus dem Arbeitsraum 94 verdrängt wird über die in axialer Richtung verlaufende Bohrung 112 durch den Fluidraum 55 und durch das geöffnete Mengensteuerventil 24 dem Arbeitsraum 26 zugeführt werden kann, was einem effizienten Befüllen des Arbeitsraum 26 förderlich ist. Eine dabei auftretende Druckpulsationen kann durch die Dämpfungseinrichtung 56 effizient vermindert werden.

Die Dämpfungseinrichtung 56 umfasst eine Membrandose 76, welche mittels einer Vorspanneinrichtung 78 zwischen dem Gehäusedeckel 53 und dem Gehäuseabsatz 54 gehalten bzw. verspannt ist. Die Vorspanneinrichtung 78 umfasst eine erste Federeinrichtung 80a, welche sich mit ihrem in der Figur oberen Ende an dem Gehäusedeckel 53 abstützt, und eine zweite Federeinrichtung 80b, welche sich mit ihrem in der Figur unteren Ende an dem Gehäuseabsatz 54 abstützt. Zwischen der ersten und der zweiten Federeinrichtung 80a und 80b ist die Membrandose 76 in ihren radialen Randbereichen gehalten. Am Gehäusedeckel 53 ist seitlich, also axial außen oder radial außen, ein Zulaufanschluss 90 vorgesehen, der mit der Niederdruckleitung 18 (Figur 1) verbindbar ist.

Vorliegend sind die erste und die zweite Federeinrichtung 80a und 80b gleichartig ausgeführt. Dabei sind beide Federeinrichtungen 80a und 80b jeweils als Scheibenfeder und zumindest in etwa nach Art einer Kegel- oder Kugelkalotte ausgeführt. Die Federeinrichtungen 80a und 80b weisen jeweils eine Mehrzahl von Öffnungen 82 auf, welche radialsymmetrisch zueinander angeordnet sind und eine jeweilige Seite der Federeinrichtung 80a bzw. 80b mit der jeweils entgegengesetzten Seite der Federeinrichtung 80a bzw. 80b hydraulisch verbinden. Beispielsweise weisen die Federeinrichtungen 80a und 80b zusammen zwanzig Öffnungen 82 auf, wodurch eine hydraulische Durchströmung des in dem Gehäusedeckel 53 gebildeten Fluidraums 55 nahezu ohne Drosselung ermöglicht wird.

Wenngleich vorliegend nur eine Membrandose 76 gezeichnet ist, sind Dämpfungseinrichtungen 56 bzw. Kolbenpumpen 28 mit mehreren, beispielsweise zwei oder drei Membrandosen 76 stets grundsätzlich möglich, beispielsweise übereinander oder nebeneinander, zum Beispiel durch die bereits beschriebenen oder durch weitere Zwischenteile, beispielsweise Federeinrichtungen, voneinander beabstandet.

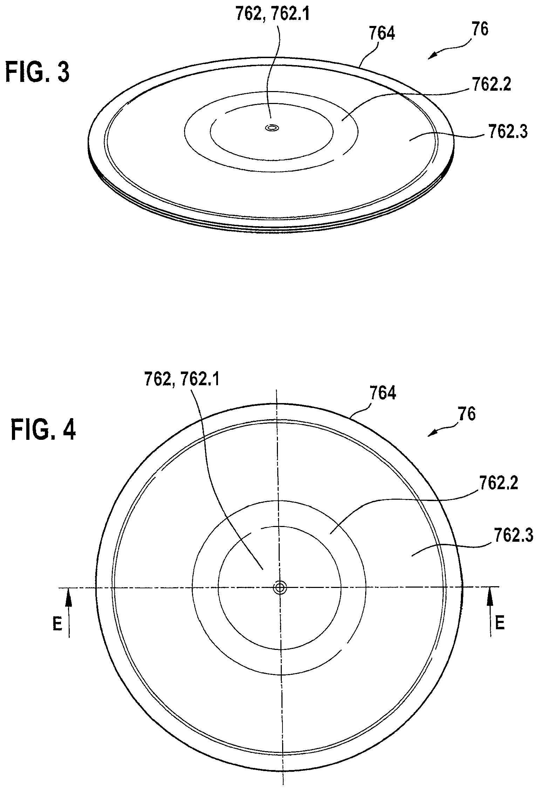

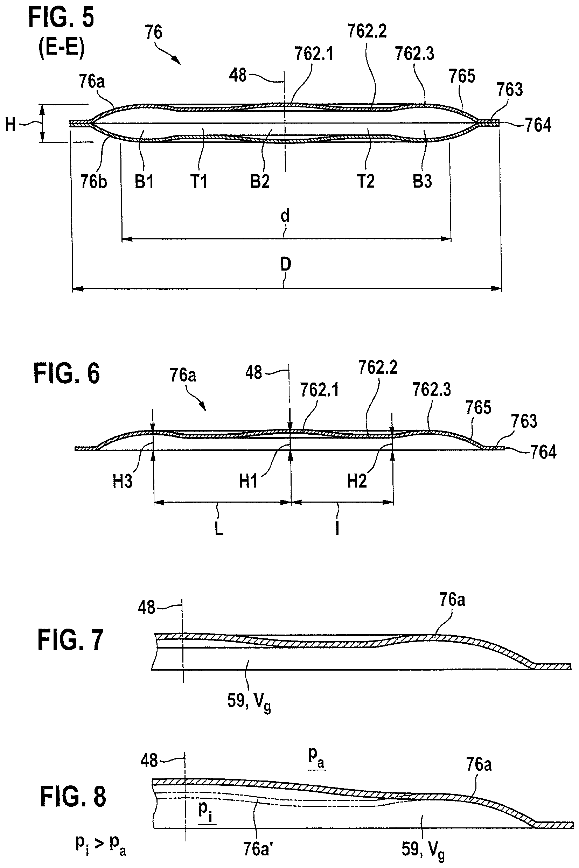

Die Gestalt der Membrandose 76 ist in den Figuren 3 bis 7 vergrößert, dargestellt, wobei Figur 3 eine perspektivische Ansicht, Figur 4 eine Aufsicht, Figur 5 einen Schnitt entlang der Linie E-E in Figur 4, die Figur 6 eine Membran 76a der Membrandose 76 und die Figur 7 ein ¼-Modell der gleichen Membrandose 76 zeigt.

Gezeigt ist in den Figuren 3 bis 7 eine Membrandose 76 bei verschwindender Druckdifferenz dp, also zum Beispiel eine Membrandose 76 im Niederdruckbereich 11 der Kraftstoff-Hochdruckpumpe 28, wobei im Gasraum 59 der Membrandose 76 ein Druck pi, beispielsweise Helium mit 6bar bei 40°C, vorliegt, der mit dem Druck pa außerhalb der Membrandose 76, also im Niederdruckbereich 11 der Kraftstoff-Hochdruckpumpe 28, gleich ist.

Es ist aber zusätzlich auch möglich, die Figuren 3 bis 7 derart zu verstehen, dass sie die Membrandose 76 in einer Umgebung außerhalb der Kraftstoff-Hochdruckpumpe 28 zeigen, beispielsweise bei einem Umgebungsdruck von 1013mbar, nachdem ein Druckausgleich zwischen der Umgebung und dem Gasraum 59, beispielsweise durch eine nicht gezeichnete sehr kleine, ansonsten weitgehend nebenwirkungsfreie Bohrung in der Membrandose 76, hergestellt wurde. In beiden Fällen, die zum Nachweis der Benutzung der Erfindung gleichberechtigt nebeneinander stehen, ergibt sich die gleiche erfindungsgemäße Gestalt der Membrandose 76.

Die Membrandose 76 besteht in diesem Beispiel aus zwei identisch geformten Membranen 76a, 76b, die an ihren Rändern 764 gasdicht miteinander verschweißt sind. Die Membranen 76a, 76b weisen in den Figuren 3 bis 7 jeweils einen zentralen Bereich 762 auf, dessen Durchmesser d sich beispielsweise über 80% des Durchmessers der Membranen 76a, 76b bzw. des Durchmessers der Membrandose D erstreckt.

Der zentrale Bereich 762 setzt sich zusammen aus seinem radial inneren Bereich 762.1, der konvex geformt ist, einem an diesen unmittelbar anschließenden ringförmigen Bereich 762.2, der konkav geformt ist und einem radial äußeren Bereich 762.3, der konvex geformt ist, und an den ringförmigen Bereich 762.2 radial außen unmittelbar anschließt.

Unmittelbar radial außerhalb des radial äußeren Bereich 762.3 des zentralen Bereichs 762 laufen die beiden Membranen 76a, 76b in einem Übergangsbereich 765 durchgängig aufeinander zu und kommen, wiederum unmittelbar radial außen anschließend in einem weiteren ringförmigen Bereich 763 plan aufeinander zu liegen, wo sie an ihren Rändern 764 miteinander dicht verschweißt sind. Ersichtlich resultiert im Querschnitt der gesamten Membrandose 76 durch die Symmetrieachse 48 die wellenförmige Gestalt der Membrandose 76, die einwärts gewandt der ringförmigen Bereiche 763, in den die Membran aufeinander aufliegen, genau drei Verdickungen B1, B2, B3 und ferner zwei zwischen den Verdickungen B1, B2, B3 liegende Verdünnungen T1, T2 aufweist.

Figur 6 zeigt weitere erfindungsgemäße Maße der Membran 76a der Membrandose 76. Die zugehörige zweite Membran 76b ist identisch ausgebildet. Es ist: Der Durchmesser der Membranen D= 45 mm; der radiale Abstand zwischen der maximalen Vorwölbung im radial inneren Bereich 762.1 und der maximalen Vorwölbung im radial äußeren Bereich 762.3 L= 15 mm; der radiale Abstand zwischen der maximalen Vorwölbung im radial inneren Bereich 762.1 und der maximalen Einwölbung im ringförmigen Bereich 762.2 I= 10mm; die Höhe der maximalen Vorwölbung im radial inneren Bereich 762.1 (halbe lichte Höhe im Inneren der Membrandose) H1 = 2 mm; die Höhe der maximalen Vorwölbung im radial äußeren Bereich 762.3 (halbe lichte Höhe im Inneren der Membrandose) H3= 1.8 mm; die Höhe der maximalen Einwölbung im ringförmigen Bereich 762.2 (halbe lichte Höhe im Inneren der Membrandose) H2 = 1.5 mm. Die Amplitude der Wellenform der Membran 76a im inneren Bereich 762 beträgt also 0,25mm, mithin 5,5/1000 des Durchmessers D der Membran 76a.

Die außen an der Membrandose 76 gemessene, maximale Höhe H der gesamten Membrandose 76 beträgt im Beispiel 4,5 mm. Die Membranen 76a, 76b weisen eine Konstante Dicke von 0,25 mm auf.

Wenn der Differenzdruck dp nicht Null ist, weist die Membrandose 76 infolge ihrer elastischen Eigenschaften nicht die in den Figuren 3 bis 7 gezeigte Form auf. Ein Beispiel hierfür ist in der Figur 8 dargestellt, wo die gleiche Membrandose 76, die in den Figuren 3 bis 7 gezeigt ist, in einem ¼-Modell gezeigt ist. Der Außendruck pₐ beträgt hierbei pa=1013mbar der Innendruck pᵢ im Gasraum 59 beträgt 4.3 bar; es wurde kein Druckausgleich vorgenommen. Zum Vergleich ist in der Figur 8 der schraffiert wiedergegebenen Kontur der Membran 76a die Kontur aus Figur 7 als unschraffierte Linie 76a' nochmals gegenübergestellt. Als Folge des Überdrucks im Inneren des Gasraums 59 und der Elastizität der Membran 76a ist diese insgesamt stärker nach außen vorgewölbt, im Beispiel um 1mm im Bereich der Mittelachse 48 der Membrandose 76.

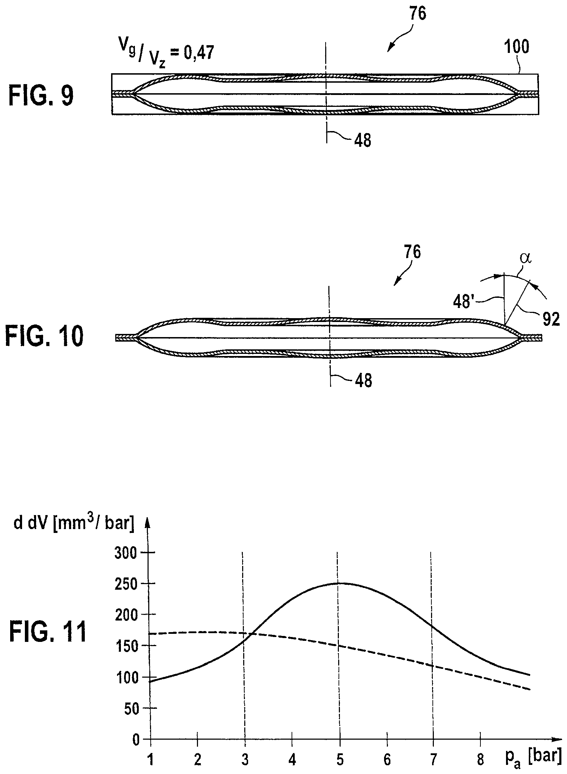

Durch ihre besondere Formgebung, insbesondere durch den flachen und radial weit erstreckten zentralen Bereich 762, ist ein vergleichsweise großes Volumen V_{g} des Gasraums 59 verfügbar, wobei die Membrandose 76 nur einen vergleichsweise kleinen Bauraum beansprucht. In Figur 9 ist dargestellt, dass das Volumen V_{g} des Gasraums 59 normiert auf das Volumen V_{z} des kleinsten geraden Kreiszylinders 100, der die Membrandose 76 vollständig aufzunehmen vermag, einen Wert von 0,47 hat.

Aus Figur 10 ist ersichtlich, dass die Normale 92 auf der Oberfläche der Membranen 76a, 76b überall einen Winkel α von höchstens 40° mit einer axialen Richtung 48' einschließt. Auf diese Weise ist eine in die Herstellung der Membrandose 76 integrierte optische Inspektion (nicht dargestellt), insbesondere eine Rissprüfung, entlang der gesamten Oberfläche der Membrandose 76 mit relativ zu der Membrandose 76 feststehender Kamera, bzw. mit Sichtprüfung aus einer einzigen Richtung 48', einfach und sicher möglich.

In Figur 11 zeigt die durchgezogene Linie die Nachgiebigkeit der erfindungsgemäßen Membrandose 76 als Funktion des Druck pa außerhalb des Gasraums 59. Ersichtlich nimmt die Nachgiebigkeit bei einem Drucks pa außerhalb des Gasraums 59 von 5bar ihren maximalen Wert von 250 mm³/bar an. Darüberhinaus beträgt die Nachgiebigkeit im gesamten funktionsrelevanten Intervall des Drucks pa außerhalb des Gasraums 59, also zwischen 3 bar und 7 bar mindestens 60% des Maximalwerts, also mindestens 150 mm³/bar. Zum Vergleich ist die Nachgiebigkeit einer Membrandose aus dem Stand der Technik mit der gestrichelten Linie eingezeichnet, deren Maximum außerhalb des funktionsrelevanten Bereichs liegt.

## Patentansprüche

1. Membrandose (76) zum Dämpfen von Druckpulsationen in einem Niederdruckbereich (11) einer Kolbenpumpe (28), wobei die Membrandose (76) zwei an ihren radialen Rändern (764) miteinander verbundene Membranen (76a, 76b) aufweist, wobei die zwei Membranen (76a, 76b) einen Gasraum (59) umschließen und wobei die zwei Membranen (76a, 76b) beide axial verformbar sind, wobei die zwei Membranen (76a, 76b) je einen in axialer Aufsicht auf die Membrandose (76) zentralen Bereich (762) aufweisen, der sich in axialer Aufsicht auf die Membrandose (76) über nicht weniger als 50% der Querschnittsfläche (Q) der Membranen (76a, 76b) erstreckt, wobei die Membranen (76a, 76b) in dem zentralen Bereich (762) wellenförmig geformt sind, wobei der zentrale Bereich (762) in seinem radial inneren Bereich (762.1) und in seinem radial äußeren Bereich (762.3) in die axiale Richtung nach außen vorgewölbt ist und dass zwischen dem radial inneren Bereich (762.1) und dem radial äußeren Bereich (762.3), diesen Bereichen jeweils unmittelbar benachbart, ein in Aufsicht ringförmiger Bereich (762.2) angeordnet ist, der in axialer Richtung nach innen eingewölbt ist, wobei eine in axiale Richtung gemessene Amplitude (A) der Wellenform zumindest 1/1000 und höchstens 2/100 der Wurzel des 4/pi-fachen der Querschnittsfläche (Q) der Membranen (76a, 76b) beträgt, wenn die Druckdifferenz (dp) Null ist, wobei die Druckdifferenz (dp) ein Druck (pi) im Gasraum (59) abzüglich eines Drucks (pa) außerhalb des Gasraums (59), insbesondere im Niederdruckbereich (11) der Kolbenpumpe (28), ist.

2. Membrandose (76) nach Anspruch 1, **dadurch gekennzeichnet, dass** der in radiale Richtung gemessene Abstand (L) zwischen der maximalen Vorwölbung im radial inneren Bereich (762.1) und der maximalen Vorwölbung im radial äußeren Bereich (762.3) zumindest 1/5 der Wurzel des 4/pi-fachen der Querschnittsfläche (Q) der Membranen (76a, 76b) beträgt.

3. Membrandose (76) nach Anspruch 1 oder 2, **dadurch gekennzeichnet, dass** der radial innere Bereich (762.1) weiter in die axiale Richtung nach außen vorgewölbt ist als der radial äußere Bereich (762.3).

4. Membrandose (76) nach Anspruch 1 oder 2, **dadurch gekennzeichnet, dass** der radial innere Bereich (762.1) und der radial äußere Bereich (762.3) gleich weit in axiale Richtung nach außen vorgewölbt sind.

5. Membrandose (76) nach einem der vorangehenden Ansprüche, **dadurch gekennzeichnet, dass** der zentrale Bereich (762) von einem weiteren ringförmigen Bereich (763) der Membranen (76a, 76b) radial umgeben ist, in dem die Membranen (76a, 76b) radial außen plan aufeinander aufliegen und/oder in dem die Membranen (76a, 76b) an ihren radialen Rändern (764) miteinander dicht verbunden, insbesondere miteinander dicht verschweißt sind.

6. Membrandose (76) nach einem der vorangehenden Ansprüche, **dadurch gekennzeichnet, dass** die Membranen (76a, 76b) und/oder der zentrale Bereich (762) und/oder der radial innere Bereich (762.1) eine in axialer Aufsicht runde, insbesondere kreisrunde, Form haben und/oder der ringförmige Bereich (762.2) und/oder der radial äußere Bereich (762.3) und/oder der weitere ringförmige Bereich (763) in eine in axialer Aufsicht runde, insbesondere kreisrunde, Außenkontur haben, wobei bevorzugt die gesamte Membrandose symmetrisch zu einer Symetrieachse (48') ist.

7. Membrandose (76) nach einem der vorangehenden Ansprüche, **dadurch gekennzeichnet, dass** der Gasraum (59) mit einem Gas gefüllt ist, insbesondere mit Helium, wobei das Gas insbesondere einen Druck von 3 bis 10bar bei 40°C und/oder 2 bis 6bar bei 20°C bei einer Druckdifferenz (dp) von Null aufweist.

8. Membrandose (76) nach einem der vorangehenden Ansprüche, **dadurch gekennzeichnet, dass** die Membranen (76a, 76b) ausgehend von ebenen Blechformteilen in jeweils einer einzigen Tiefziehstufe formbar und/oder geformt sind.

9. Membrandose (76) nach einem der vorangehenden Ansprüche, **dadurch gekennzeichnet, dass** die Nachgiebigkeit der Membrandose (76), also die Änderung des Volumen (V_{g}) des Gasraums (59) pro Änderung der Druckdifferenz (dp), am größten ist, wenn die Druckdifferenz (dp) Null ist.

10. Membrandose (76) nach einem der vorangehenden Ansprüche, **dadurch gekennzeichnet, dass** die Nachgiebigkeit der Membrandose (76), also die Änderung des Volumen (V_{g}) des Gasraums (59) pro Änderung der Druckdifferenz (dp), in einem Intervall der Druckdifferenzen (dp) von mindestens 3 bar, also zum Beispiel zwischen - 1,5bar und +1,5bar, stets mindestens 60% der maximalen Nachgiebigkeit der Membrandose (76) beträgt.

11. Membrandose (76) nach einem der vorangehenden Ansprüche, **dadurch gekennzeichnet, dass** das Volumen (V_{g}) des Gasraums (59) normiert auf das Volumen (V_{z}) des kleinsten Zylinders (100), der die Membrandose (76) vollständig aufzunehmen vermag, nicht kleiner als 0,4 ist.

12. Kolbenpumpe (28) mit einem Niederdruckbereich (11), **dadurch gekennzeichnet, dass** zumindest eine Membrandose (76) nach einem der vorangehenden Ansprüche in ihrem Niederdruckbereich (11) angeordnet ist, insbesondere fluidisch zwischen einem Zulaufanschluss (90) der Kolbenpumpe (28) und einem Einlassventil (91) der Kolbenpumpe (28).

13. Kolbenpumpe (28) nach Anspruch 12 **dadurch gekennzeichnet, dass** die Membrandose (76) durch zwei Halteteile (80a, 80b) an den radialen Rändern (761) der Membranen (76a, 76b) gehalten ist, insbesondere zwischen einem Gehäuse (50) der Kolbenpumpe (28) und einem auf dem Gehäuse (50) aufgeschweißten Gehäusedeckel (53) der Kolbenpumpe (28).

14. Verfahrens zum Betreiben einer Kolbenpumpe (28) nach einem der Ansprüche 12 oder 13, beispielsweise in einem Kraftstoffsystem (10) für eine Brennkraftmaschine, wobei ein Druck (pₐ) im Niederdruckbereich (11) der Kolbenpumpe (76), beispielsweise durch die Vorsehung einer entsprechenden Vorpumpe (16), gleich dem Druck (pᵢ) im Gasraum (59) der Membrandose (76) gewählt ist, beispielsweise in einem Bereich von 4bar bis 7bar bei 20°C oder bei 40°C oder bei einer Temperatur zwischen 20°C und 40°C,

## Claims

1. Diaphragm cell (76) for damping pressure oscillations in a low-pressure range (11) of a piston pump (28), wherein the diaphragm cell (76) has two diaphragms (76a, 76b) which are connected to one another at their radial edges (764), wherein the two diaphragms (76a, 76b) enclose a gas space (59), and wherein the two diaphragms (76a, 76b) are both axially deformable, wherein the two diaphragms (76a, 76b) each have a region (762) which is central in an axial top view of the diaphragm cell (76) and, in an axial top view of the diaphragm cell (76), extends over not less than 50% of the cross-sectional area (Q) of the diaphragms (76a, 76b), wherein the diaphragms (76a, 76b) are shaped in an undulating fashion in the central region (762), wherein the central region (762) is curved outward in the axial direction in its radially inner region (762.1) and in its radially outer region (762.3), and in that a region (762.2) which is annular in a top view is arranged between the radially inner region (762.1) and the radially outer region (762.3), in each case directly adjacent to these regions, said region (762.2) being inwardly curved in the axial direction, wherein an amplitude (A) of the wave shape measured in the axial direction is at least 1/1000 and at most 2/100 of the root of 4/pi times the cross-sectional area (Q) of the diaphragms (76a, 76b) if the pressure difference (dp) is zero, wherein the pressure difference (dp) is a pressure (pi) in the gas space (59) minus a pressure (pa) outside the gas space (59), in particular in the low-pressure region (11) of the piston pump (28).

2. Diaphragm cell (76) according to Claim 1, **characterized in that** the distance (L), measured in the radial direction, between the maximum curvature in the radially inner region (762.1) and the maximum curvature in the radially outer region (762.3) is at least 1.5 of the root of 4/pi times the cross-sectional area (Q) of the diaphragms (76a, 76b).

3. Diaphragm cell (76) according to Claim 1 or 2, **characterized in that** the radially inner region (762.1) is curved further outward in the axial direction than the radially outer region (762.3).

4. Diaphragm cell (76) according to Claim 1 or 2, **characterized in that** the radially inner region (762.1) and the radially outer region (762.3) are curved outward to an equal extent in the axial direction.

5. Diaphragm cell (76) according to one of the preceding claims, **characterized in that** the central region (762) is surrounded radially by a further annular region (763) of the diaphragms (76a, 76b), in which region (763) the diaphragms (76a, 76b) rest radially outwardly flat one on top of the other and/or in which the diaphragms (76a, 76b) are tightly connected to one another, in particular tightly rolled to one another, at their radial edges (764).

6. Diaphragm cell (76) according to one of the preceding claims, **characterized in that** the diaphragms (76a, 76b) and/or the central region (762) and/or the radially inner region (762.1) have an, in an axial top view, round, in particular circular, shape, and/or the annular region (762.2) and/or the radially outer region (762.3) and/or the further annular region (763) have in an, in an axial top view, round, in particular circular, outer contour, wherein the entire diaphragm cell is preferably symmetrical with respect to an axis of symmetry (48').

7. Diaphragm cell (76) according to one of the preceding claims, **characterized in that** the gas space (59) is filled with a gas, in particular with helium, wherein the gas has, in particular, a pressure of 3 to 10 bar at 40°C and/or 2 to 6 bar at 20°C in the case of a pressure difference (dp) of zero.

8. Diaphragm cell (76) according to one of the preceding claims, **characterized in that** the diaphragms (76a, 76b) can be and/or are shaped from linear sheet-metal shaped parts in a single deep-drawing step in each case.

9. Diaphragm cell (76) according to one of the preceding claims, **characterized in that** the resilience of the diaphragm cell (76), that is to say the change in the volume (V_{g}) of the gas space (59) per change in the pressure difference (dp), is greatest when the pressure difference (dp) is zero.

10. Diaphragm cell (76) according to one of the preceding claims, **characterized in that** the resilience of the diaphragm cell (76), that is to say the change in the volume (V_{g}) of the gas space (59) per change in the pressure difference (dp), in an interval between the pressure differences (dp) of at least 3 bar, that is to say for example between -1.5 bar and +1.5 bar, is always at least 60% of the maximum resilience of the diaphragm cell (76).

11. Diaphragm cell (76) according to one of the preceding claims, **characterized in that** the volume (V_{g}) of the gas space (59) is not less than 0.4 when standardized to the volume (V_{z}) of the smallest cylinder (100) which can completely accommodate the diaphragm cell (76) .

12. Piston pump (28) having a low-pressure region (11), **characterized in that** at least one diaphragm cell (76) according to one of the preceding claims is arranged in its low-pressure region (11), in particular fluidically between an inflow connection (90) of the piston pump (28) and an inlet valve (91) of the piston pump (28).

13. Piston pump (28) according to Claim 12, **characterized in that** the diaphragm cell (76) is secured by two securing parts (80a, 80b) at the radial edges (761) of the diaphragms (76a, 76b), in particular between a housing (50) of the piston pump (28) and a housing cover (53), welded onto the housing (50), of the piston pump (28).

14. Method for operating a piston pump (28) according to one of Claims 12 and 13, for example in a fuel system (10) for an internal combustion engine, wherein a pressure (pₐ) in the low-pressure region (11) of the piston pump (76) is selected, for example by providing a corresponding booster pump (16), to be equal to the pressure (pi) in the gas space (59) of the diaphragm cell (76), for example in a range from 4 bar to 7 bar at 20°C or at 40°C or at a temperature between 20°C and 40°C.

## Revendications

1. Capsule à membrane (76) pour l'amortissement de pulsations de pression dans une région basse pression (11) d'une pompe à piston (28), la capsule à membrane (76) présentant deux membranes (76a, 76b) connectées l'une à l'autre au niveau de leurs bords radiaux (764), les deux membranes (76a, 76b) entourant un espace de gaz (59) et les deux membranes (76a, 76b) pouvant toutes deux être déformées axialement, les deux membranes (76a, 76b) présentant chacune une région centrale (762) en vue de dessus axiale sur la capsule à membrane (76), laquelle s'étend, en vue de dessus axiale, sur la capsule à membrane (76) sur pas moins de 50 % de la surface en section transversale (Q) des membranes (76a, 76b), les membranes (76a, 76b) présentant une forme ondulée dans la région centrale (762), la région centrale (762) étant précintrée vers l'extérieur dans la direction axiale dans sa région radialement intérieure (762.1) et dans sa région radialement extérieure (762.3), et qu'une région annulaire en vue de dessus (762.2), à chaque fois immédiatement adjacente à la région radialement intérieure (762.1) et à la région radialement extérieure (762.3), est disposée entre ces régions, laquelle est cintrée vers l'intérieur dans la direction axiale, une amplitude (A) de la forme ondulée, mesurée dans la direction axiale, représentant au moins 1/1000 et au plus 2/100 de la racine de 4/n fois la surface en section transversale (Q) des membranes (76a, 76b), lorsque la différence de pression (dp) est nulle, la différence de pression (dp) étant une pression (pi) dans l'espace de gaz (59) moins une pression (pa) à l'extérieur de l'espace de gaz (59), en particulier dans la région basse pression (11) de la pompe à piston (28) .

2. Capsule à membrane (76) selon la revendication 1, **caractérisée en ce que** la distance (L) mesurée dans la direction radiale entre le précintrage maximal dans la région radialement intérieure (762.1) et le précintrage maximal dans la région radialement extérieure (762.3) vaut au moins 1/5 de la racine de 4/n fois la surface en section transversale (Q) des membranes (76a, 76b).

3. Capsule à membrane (76) selon la revendication 1 ou 2, **caractérisée en ce que** la région radialement intérieure (762.1) est précintrée vers l'extérieur dans la direction axiale davantage que la région radialement extérieure (762.3).

4. Capsule à membrane (76) selon la revendication 1 ou 2, **caractérisée en ce que** la région radialement intérieure (762.1) et la région radialement extérieure (762.3) sont précintrées vers l'extérieur dans la direction axiale dans une même mesure.

5. Capsule à membrane (76) selon l'une quelconque des revendications précédentes, **caractérisée en ce que** la région centrale (762) est entourée radialement par une région annulaire supplémentaire (763) des membranes (76a, 76b), dans laquelle les membranes (76a, 76b) reposent radialement à l'extérieur à plat l'une sur l'autre et/ou dans laquelle les membranes (76a, 76b) sont connectées hermétiquement l'une à l'autre au niveau de leurs bords radiaux (764), en particulier sont soudées hermétiquement l'une à l'autre.

6. Capsule à membrane (76) selon l'une quelconque des revendications précédentes, **caractérisée en ce que** les membranes (76a, 76b) et/ou la région centrale (762) et/ou la région radialement intérieure (762.1) présentent, en vue de dessus axiale, une forme ronde, en particulier ronde circulaire et/ou la région annulaire (762.2) et/ou la région radialement extérieure (762.3) et/ou la région annulaire supplémentaire (763) présentent dans un contour extérieur rond dans une vue de dessus axiale, en particulier rond circulaire, de préférence la capsule à membrane dans son ensemble étant symétrique par rapport à un axe de symétrie (48').

7. Capsule à membrane (76) selon l'une quelconque des revendications précédentes, **caractérisée en ce que** l'espace de gaz (59) est rempli de gaz, en particulier d'hélium, le gaz présentant notamment une pression de 3 à 10 bars à 40°C et/ou de 2 à 6 bars à 20°C pour une différence de pression (dp) nulle.

8. Capsule à membrane (76) selon l'une quelconque des revendications précédentes, **caractérisée en ce que** les membranes (76a, 76b) sont ou peuvent être formées à partir de pièces en tôle planes façonnées à chaque fois dans une seule étape d'emboutissage profond.

9. Capsule à membrane (76) selon l'une quelconque des revendications précédentes, **caractérisée en ce que** la souplesse de la capsule à membrane (76), c'est-à-dire la variation du volume (V_{g}) de l'espace de gaz (59) par variation de différence de pression (dp), est maximale lorsque la différence de pression (dp) est nulle.

10. Capsule à membrane (76) selon l'une quelconque des revendications précédentes, **caractérisée en ce que** la souplesse de la capsule à membrane (76), c'est-à-dire la variation du volume (V_{g}) de l'espace de gaz (59) par variation de différence de pression (dp), dans un intervalle de différence de pression (dp) d'au moins 3 bars, c'est-à-dire par exemple compris entre -1,5 bar et +1,5 bar, vaut toujours au moins 60 % de la souplesse maximale de la capsule à membrane (76).

11. Capsule à membrane (76) selon l'une quelconque des revendications précédentes, **caractérisée en ce que** le volume (V_{g}) de l'espace de gaz (59), normé au volume (V_{z}) du plus petit cylindre (100) qui peut recevoir complètement la capsule à membrane (76), n'est pas inférieur à 0,4.

12. Pompe à piston (28) comprenant une région basse pression (11), **caractérisée en ce qu'**au moins une capsule à membrane (76) selon l'une quelconque des revendications précédentes est disposée dans sa région basse pression (11), en particulier fluidiquement entre un raccord d'alimentation (90) de la pompe à piston (28) et une soupape d'admission (91) de la pompe à piston (28).

13. Pompe à piston (28) selon la revendication 12, **caractérisée en ce que** la capsule à membrane (76) est retenue par deux parties de retenue (80a, 80b) au niveau des bords radiaux (761) des membranes (76a, 76b), en particulier entre un boîtier (50) de la pompe à piston (28) et un couvercle de boîtier (53) de la pompe à piston (28) soudé sur le boîtier (50).

14. Procédé pour faire fonctionner une pompe à piston (28) selon l'une quelconque des revendications 12 et 13, par exemple dans un système de carburant (10) pour un moteur à combustion interne, dans lequel une pression (pₐ) dans la région basse pression (11) de la pompe à piston (76), par exemple en prévoyant une pompe préalable correspondante (16), est choisie de manière à être égale à la pression (pᵢ) dans l'espace de gaz (59) de la capsule à membrane (76), par exemple dans une plage de 4 bars à 7 bars à 20°C ou à 40°C ou à une température comprise entre 20°C et 40°C.
